# EUROPEAN PATENT SPECIFICATION

(11) **EP 3 402 044 B1**
(45) Date of publication and mention of the grant of the patent: **03.12.2025**
(21) Application number: 17382260.2
(22) Date of filing: 10.05.2017
(51) Int. Cl.: H02K 1/27, H02K 1/28

(54) **MAGNET MODULE AND METHOD OF MANUFACTURING SAME**
PERMANENTMAGNETMODULE UND VERFAHREN ZU DEREN PRODUZIEREN
MODULE À AIMANTS PERMANENTS ET MÉTHODE DE FABRICATION DE L'MÊME

(43) Date of publication of application: 14.11.2018
(73) Proprietor: GE Renewable Technologies Wind B.V., 4817 PA Breda (NL)
(72) Inventor: Bueno de Santiago, Adrian, 08005 Barcelona (ES); Urresty, Julio César, 08029 Barcelona (ES)
(74) Representative: de Rooij, Mathieu Julien

(56) References cited:
- EP-A1- 2 506 400
- EP-A1- 2 658 095
- EP-A1- 2 712 060
- WO-A1-2007/063370
- WO-A1-2013/145684
- DE-A1- 102004 031 329
- US-A1- 2007 090 708
- US-A1- 2013 270 954
- US-A1- 2016 218 574

## Description

The present disclosure relates to a permanent magnet module for an electrical machine, and further relates to an electrical machine and a method for manufacturing such a permanent magnet module.

### BACKGROUND

Electrical machines, such as motors and generators, generally comprise a rotor structure and a stator structure. In case of permanent magnet excited generators (PMG), permanent magnets (PM) are generally comprised in the rotor (although they could also be arranged alternatively in the stator structure), whereas winding elements (e.g. coils) are usually included in the stator (although they could alternatively be arranged in the rotor structure). Permanent magnet generators are generally deemed to be reliable and require less maintenance than other generator typologies.

At least for this reason, permanent magnet generators may be used for example in wind turbines, in particular in offshore wind turbines. Wind turbines generally comprise a rotor with a rotor hub and a plurality of blades. The rotor is set into rotation under the influence of the wind on the blades. The rotation of the rotor shaft either directly drives the generator rotor ("directly driven") or through the use of a gearbox. Such a direct drive wind turbine generator may have e.g. a diameter of 6 - 8 meters (236 - 315 inches), a length of e.g. 2 - 3 meters (79 - 118 inches) and may rotate at low speed, for example in the range of 2 to 20 rpm (revolutions per minute). Alternatively, permanent magnet generators may also be coupled to a gearbox which increases the rotational speed of the generator to for example between 50 to 500 rpm or even more.

Multiple permanent magnets may be provided in permanent magnet modules, which may be attached to the rotor as a single item. Examples of permanent magnet modules may be found in US 2016/0218574 A1, US 2013/270954 A1, WO 2007/063370 A1, DE 10 2004 031329 A1, WO 2013/145684 A1, EP 2 712 060 A1 or EP 2 506 400 A1. A permanent magnet module may be defined as a unit having a plurality of permanent magnets, such that the plurality of magnets can be mounted and unmounted together. Such a module may have a module base with a shape suitable for housing or carrying a plurality of permanent magnets that may be fixed to the base. The base may be configured to be fixed to a rotor rim in such a way that the plurality of magnets are fixed together to the rotor rim
through the module base. The use of permanent magnet modules may facilitate the manufacturing of a rotor.

Permanent magnet modules may have a module base formed as a stack of metal sheets which may be separated from each other by means of electrically insulating material. With such an arrangement, losses caused by eddy currents, might be reduced in the corresponding electrical machine such that its efficiency may be improved.

US2007/0090708A1 discloses an electric rotating machine comprising a magnet rotor having a rotor yoke and magnets attached to the rotor yoke; and a stator having an armature core and an armature coil or coils wound around the armature core.

WO2013/145684 discloses a rotor of a rotating electrical machine compris-ing an annular member which rotates about a rotation axis; a plurality of pedestals which extend in the axial direction and which are fixed to the out-er circumferential surface of the annular member so as to form gaps be-tween each other along the circumferential direction, a first groove extend-ing in the axial direction and opening on the outside in the radial direction and outside in the axial direction being formed on the radially outside sur-face of each of the pedestals; and a permanent magnet fixed to the outside, in the radial direction, of each of the pedestals.

Assembling such a permanent magnet module made of a stack of metal sheets may require complicated, costly and lengthy processes. For example, it may require punching a steel coil to create sheets, applying a bonding varnish on the sheets or on the coil and stacking these sheets generally using special and customized tools. In some cases further operations may be required such as curing the stack of sheets in an oven for bonding the sheets all together and machining some threads and holes. This is a long and complex process, which produces a lot of scrap material and, thus this is an expensive process. Furthermore, the bonding strength may be deteriorated during the lifecycle of the electrical machine and the stiffness of the module may be very low in the axial direction, i.e. the stacking direction.

Alternatively, other methods of joining sheets for forming a module may be for example riveting, screwing, welding, etc.; which may also be time consuming and labor intensive. Furthermore, these processes are not suitable for relatively small and thin sheet profiles.

However, this size and type of electrical machines is not limited to generators in direct drive offshore applications, and not even to the field of wind turbines only. Generators of considerable dimensions that may suffer from the same problems and/or have the same complications may also be found e.g. in steam turbines and water turbines. Also relatively large permanent magnet motors may have the same or similar problems.

The present disclosure provides examples of systems and methods that at least partially resolve some of the aforementioned disadvantages.

### SUMMARY

In a first aspect, a permanent magnet module for an electrical machine extending along an axial direction is provided. The permanent magnet module comprises one or more permanent magnets and a base having a bottom surface adapted to be fixed to a rotor of an electrical machine and a top surface for supporting the one or more permanent magnets. The base comprises a plurality of grooves partially extending through the base from the top surface.

In this aspect, the plurality of grooves of the base may prevent an electrical current circulating along the axial direction of the permanent magnet module. Such a plurality of grooves can reduce the eddy currents and losses of the permanent magnet module may thus also be reduced. In addition, the base comprises a bottom surface extending substantially continuously in the axial direction, which means that the base of the permanent magnet module is or can be made from a single solid piece. The complicated and lengthy processes associated with manufacturing a permanent magnet module made of a stack of metal sheets are avoided. In this way, this permanent magnet module does not require joining metal sheets for forming the module.

Therefore, a permanent magnet module requiring less time consuming and labor intensive manufacturing and having a good electrical efficiency is provided.

In yet a further aspect, a method of manufacturing a permanent magnet module extending along an axial direction according to any of the examples herein described is provided. The method comprises forming a base having a bottom surface adapted to be fixed to a rotor of an electrical machine, and a top surface for supporting one or more permanent magnets; machining a plurality of grooves on the base partially extending through the base from the top surface; and attaching one or more permanent magnets to the top surface.

### BRIEF DESCRIPTION OF THE DRAWINGS

Non-limiting examples of the present disclosure will be described in the following, with reference to the appended drawings, in which:
Figure 1 schematically illustrates an axial cross-section a permanent magnet module in accordance to one example;
Figure 2 schematically shows an isometric view of the base of the permanent magnet of the Figure 1;
Figure 3 represents a zoomed-in view of the area of Figure 2 indicated with a discontinuous circle;
Figure 4 schematically illustrates an axial cross-section of a permanent magnet module in accordance with another example;
Figure 5 schematically illustrates an axial cross-section of the base of the permanent module of the Figure 4;
Figure 6 schematically represents a lateral view of the base of the Figure 1 and 2;
Figure 7 and Figure 8 schematically represent a lateral view of another example of a permanent magnet module;
Figure 9 illustrates a further example of a base of the permanent magnet;
Figure 10 shows a portion of one example of an electrical machine;
Figure 11 shows a portion of another example of an electrical machine;
Figure 12 is a flow diagram of a method of manufacturing a permanent magnet according to an example;

### DETAILED DESCRIPTION OF EXAMPLES

In these figures the same reference signs have been used to designate matching elements.

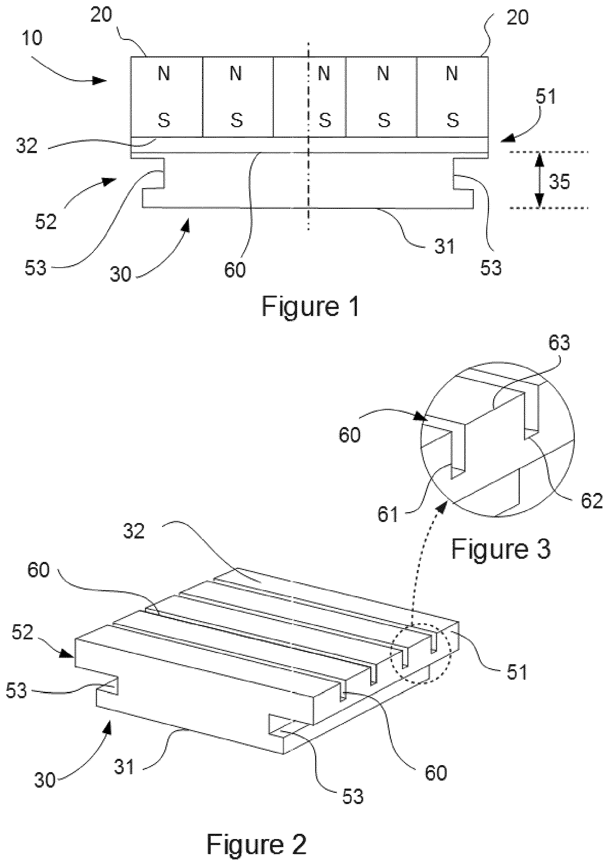

Figure 1 schematically illustrates an axial cross-section of an example of a permanent magnet module 10 for an electrical machine. The permanent magnet module 10 for an electrical machine according to this example, extends along an axial direction (a direction into the paper in Figure 1) and comprises one or more permanent magnets 20 and a base 30 having a bottom surface 31 adapted to be fixed to a rotor of an electrical machine and a top surface 32 for supporting one or more permanent magnets 20. The base further comprises a plurality of grooves 60 (more clearly shown in e.g. Figures 2 and 3) partially extending through the base from the top surface 32. In this way, the plurality of grooves does not extend completely from the top surface 32 to the bottom surface 31. Grooves may be defined as channels or narrow cuts creating a hollow space not completely extending through the base, i.e. grooves do not reach the bottom surface of the base. Therefore, grooves do not split the base into different separated parts. Consequently, the bottom surface 31 extends substantially continuously in the axial direction. On the contrary, a base formed by a stack of metal sheets does not extend substantially continuously in the axial direction. As the base is not formed by a stack of metal sheets, the number of components that are to be assembled is reduced and manufacturing tolerances may also decrease.

In this example, the plurality of grooves 60 partially extends through the base from the top surface 32 to a first height 35 above the bottom surface 31, such that the bottom surface 31 extends substantially continuously in the axial direction. In addition, the plurality of grooves 60 may partially extend from the top surface substantially perpendicular to the axial direction towards to a first height 35 above the bottom surface 31. Alternatively, the grooves may partially extend through the base from the top surface towards the bottom surface in an oblique direction with respect to the axial direction of the module.

In the example of Figure 1, the top surface 32 of the base comprises a flat surface, i.e. substantially parallel to the bottom surface 31. In the example of Figure 1, six substantially rectangular magnets are mounted on the flat surface of the top surface 32, and are arranged such as to have a radial magnetic configuration. In this way, one or more of the permanent magnets are mounted on the flat surface of the top surface, and are arranged such as to have a radial magnetic configuration. The magnets 20 may be securely fixed to the top surface 32 by e.g. using suitable adhesive or mechanical fasteners. The North and South of the permanent magnets may be as indicated in Figure 1, i.e. the South of each of the magnets of one permanent module are arranged near the top surface 32 of the base, while the North of each of the magnets are arranged on the opposite side, i.e. facing the stator. Alternatively, the North of each of the magnets may be arranged on the top surface 32 of the base and then the South on the opposite side, i.e. the North facing the rotor and the South facing the stator. Such a magnet configuration is generally called a radial magnetic configuration, since the North and South of the magnets are arranged along a substantially radial direction.

In this aspect, several longitudinal rows of permanent magnets, e.g. from two to six, may be mounted on the top surface in the radial direction. The axial rows of magnets may be a single magnet, or a plurality of magnets axially positioned behind each other.

In other examples, the top surface may comprise inclined surfaces instead of a flat surface, or inclined and flat surfaces. Mounting the permanent magnets 20 on the flat surface of the top surface 32 may require less assembling time and the resulting module may have more magnetic area than in other configurations.

The base 30 further comprises a first lateral surface 51 and a second lateral surface 52. The first lateral surface 51 and the second lateral surface 52 may be substantially parallel. The first lateral surface and the second lateral surface may be perpendicular to the bottom surface 31, as shown in Figure 1. In some examples, the first lateral surface and the second lateral surface may be perpendicular to the top surface, as shown in Figure 1. In this example, the permanent magnet module may be of substantially constant cross-section.

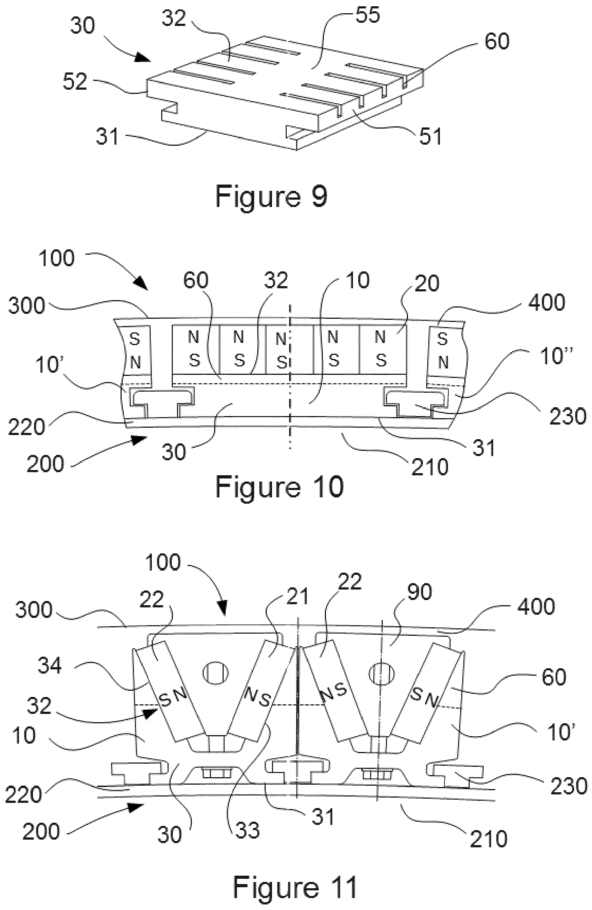

In some examples, the base 30 may comprise at least one groove extending from the first lateral surface 51 to an intermediate point between the first 51 and the second lateral surfaces 52. An example hereof is shown in Figure 9. Alternatively or additionally, the base may comprise at least one groove that extends from the first lateral surface 51 to the second lateral surface 52. In this way, the at least one groove extends continuously from the first lateral surface to the intermediate point and from the intermediate point to the second lateral surface. An example hereof is shown e.g. in Figure 2.

The base 30 may further comprise lateral recesses 53 extending along the axial direction. In some examples, the each of the first 51 and the second lateral surface 52 may comprise a lateral recess 53. Suitably shaped anchors (not shown in Figure 1, but illustrated e.g. in Figure 10) may be used for fixing the permanent magnet modules 10 to the rotor rim, e.g. anchors engaging with the surfaces of the recesses when fixed.

The base 30 of any of the examples herein described may be a solid piece made from a magnetically conducting material such as for example steel. The permanent magnets may be made for example from AlNiCo steel (Aluminium-Nickel-Cobalt), rare earth magnetic materials such as neodymium (NdFeB), or samarium-cobalt, but may also be made from for example ceramic materials.

Figure 2 schematically shows an isometric view of the base of the permanent magnet of the Figure 1. The base 30 extends along an axial direction and comprises a plurality of grooves 60 partially extending through the base from the top surface 32 Therefore, the bottom surface 31 extends substantially continuously in the axial direction. In this example, the plurality of grooves partially extend from the top surface 32 perpendicular to the axial direction to a first height 35 above the bottom surface 31.

In this example, the base 30 comprises a first 51 and a second lateral surfaces 52 and the grooves 60 extend from the first lateral surface 51 to an intermediate point between the first and the second lateral surfaces and continues to the second lateral surface 52, i.e. the groove may extend from the first lateral 51 to the second lateral surface 52 through an intermediate point arranged between these surfaces.

Figure 3 represents a zoomed-in view of a surface of the Figure 2. The grooves 60 of Figure 3 comprise a depth 61 and a width 62 in the axial direction of the module 10. Therefore, the height of module may be defined as the sum of the depth 61 of a groove and the first height 35 above the bottom surface. In this example, the grooves have a substantially rectangular cross-section defined by the depth 61 and the width 62. From one groove 60 to the neighboring groove 60 an axial distance 63 is defined. Although Figure 3 represents a zoomed-in view of a surface of the Figure 2, the grooves 60 illustrated in Figure 3 may also be manufactured in other examples of the permanent magnet module 10 herein described, as for example, having inclined top surfaces or different height.

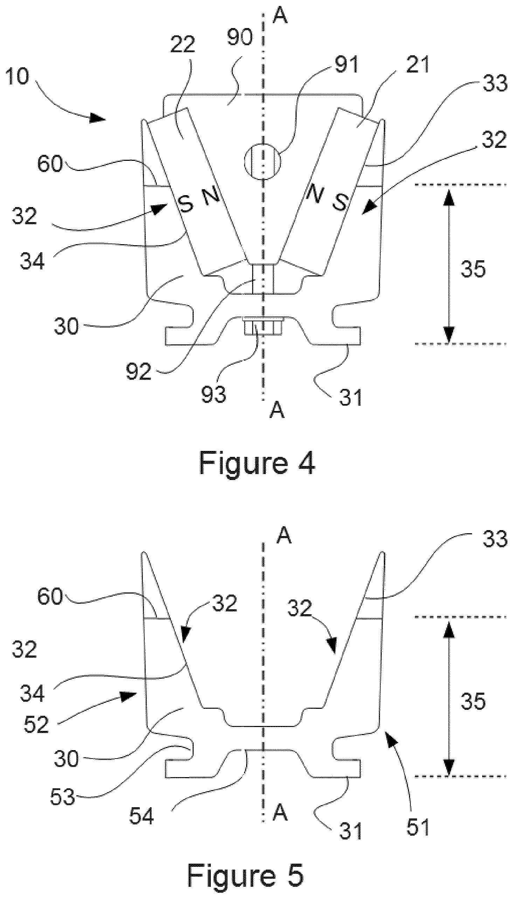

Figure 4 schematically illustrates an axial cross-section of a permanent magnet module 10 in accordance with another example. The permanent magnet module 10 for an electrical machine according to this example extends along an axial direction and comprises two permanent magnets 20 and a base 30 having a bottom surface 31 adapted to be fixed to a rotor of an electrical machine and a top surface for supporting the permanent magnets 20. The base further comprises a plurality of grooves 60 partially extending through the base from the top surface 32, such that the bottom surface 31 extends substantially continuously in the axial direction. The plurality of grooves extends from the top surface to a first height 35 above the bottom surface 31. In this example, the plurality of grooves partially extend from the top surface 32 perpendicular to the axial direction to the first height 35 above the bottom surface 31.

The permanent magnet module may comprise a central magnet support 90 which acts as a flux concentrator with a cross-section that is substantially close to an inverted triangle. At the top two vertices of the triangle, lateral hooks may be incorporated in order to mechanically lock the permanent magnets 20 in between the central magnet support 90 and the base 30 of the permanent magnet module 10.

The central magnet support 90 may comprise an axial hole 91 in which a rod (not shown) may be inserted. A plurality of radial holes, at different axial positions, may be provided in the central magnet support structure. The rod may comprise a number of transverse through-holes, such that when the rod is inserted, the transverse through-holes are lined up with the radial holes of the central magnet support 90. Bolts 92 with nuts 93 may be inserted in these radial holes and may extend into and beyond the transverse holes of rod, into an upper portion of the central magnet support 90. The permanent magnets 20 may thus be clamped between base 30 and central magnet support 90.

In this aspect, the permanent magnet module may comprise a first magnet 21 and a second magnet 22. The permanent magnets may be of generally rectangular cross-section and may be inclined outwardly with respect to the radial plane of the permanent magnet module (line A-A), i.e. inclined outwardly along a radial direction which is perpendicular to the axial direction extending from the bottom surface of the base to the top surface of the base. In some examples, the axial rows of magnets may be a single magnet, or a plurality of magnets axially positioned behind each other. In some examples, the permanent magnet module 10 may comprise flat and inclined magnets.

In the example of Figure 4, the top surface 32 of the base comprises first inclined surface 33 and second inclined surface 34. The first permanent magnet 21 may be mounted on the first inclined surface 33 and the second permanent magnet 22 may be mounted on the second inclined surface 34. Inclination of the magnets with respect to the corresponding local radial plane (radial plane passing through the center of the magnet) may vary. The angle of inclination with respect to the radial plane may be in the range of 0 - 90°, optionally in the range of 10° - 50°, and optionally between 10° and 40°.

In some examples, the first inclined surface 33 and the second inclined surface 34 may additionally comprise a protrusion at the end of the surfaces that are formed to mechanically retain the magnets.

The permanent magnet modules as illustrated herein may have a length that substantially corresponds to the axial length of the electrical machine, e.g. a generator or motor; each permanent magnet module thus spans substantially the entire length of the electrical machine. In other embodiments, the length of a module may be substantially half of the axial length of the electrical machine; two permanent magnet modules span the length of the electrical machine. In these cases, one module may be inserted from the front and one module may be inserted from the rear. Similarly, in some embodiments, the anchors may span the length of the electrical machine. In other embodiments, the anchors may be divided in various segments that together span the length of the electrical machine.

Figure 5 schematically illustrates an axial cross-section of the base of the permanent module of the Figure 4. The base 30 according to Figure 5 further comprises a first lateral surface 51 and a second lateral surface 52. The first lateral surface 51 and the second lateral surface 52 may be substantially parallel. The first lateral surface 51 and the top surface 32 may define an acute angle between them. Similarly, the second lateral surface 52 and the top surface 32 may also form an acute angle between them. The first inclined surface 33 and the second inclined surface 34 are then inclined with respect to the radial plane of the permanent magnet module, i.e. along a radial direction perpendicular to the axial direction.

In this example, the base extends from the bottom surface to the top surface along a radial direction perpendicular to the axial direction. In this example, the base 30 may further comprise a first lateral surface 51 and a second lateral surface 52 and the top surface 32 may comprise a first inclined surface 33 and a second inclined surface 34, and wherein the first inclined surface 33 and the second inclined surface 34 are outwardly inclined with respect to the radial direction along the radial direction. In this aspect, the permanent magnet module may comprise at least two permanent magnets, and wherein one of the at least two permanent magnets is mounted on the first inclined surface 33 and the other one of the at least two permanent magnets is mounted on the second inclined surface 34 and are arranged such as to have a circumferential magnetic orientation. In this example, the base 30 comprises a first 51 and a second lateral surface 52 and at least one groove of the plurality of grooves 60 extends from the first lateral surface 51 to the second lateral surface 52.

In the example of Figure 4 and 5, the base 30 may further comprise lateral recesses 53 extending along the axial direction. As described with respect to the example of the Figure 1, the each of the first 51 and the second lateral surfaces 52 may comprise a lateral recess 53 and suitably shaped anchors (not shown in Figure 5) may be used for fixing the permanent magnet modules 10 to the rotor rim. In this manner, attaching the module of Figure 5 to the rotor may be as described with respect to the Figure 1.

Furthermore, the base 30 may further comprise a bottom recess 54 for reducing the weight of the permanent magnet module 10. Such a bottom recess 54 may also be found in other examples herein described.

The North and South of the permanent magnets may be as indicated in Figure 4. The magnets may have a circumferential orientation (also sometimes referred to as "transversal" or "tangential" orientation), i.e. the North and the South of each of the magnets are arranged in the rotor next to each other in a circumferential (or "tangential" direction.

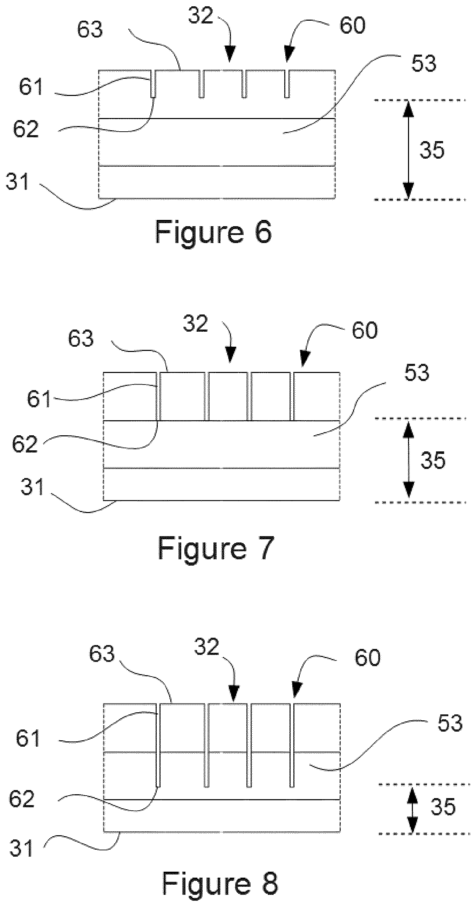

Figure 6 schematically represents a lateral view of the base of Figures 1 and 2. In the example of the Figure 6, the grooves have a depth 61 of less than one third of the height of the base 30. Or in other words, the first height 65 is at least the double of the depth 61. In the example of Figure 6, the depth 61 may be for example of less than 10 mm (0.39 inches) and the first height 35 for example longer than 20 mm (0.79 inches).

Similarly, the grooves according to Figure 6 may also be found in other examples of permanent magnet modules herein described, for example in modules having inclined surfaces such as those illustrated in Figure 4 and 5.

Figure 7 and Figure 8 schematically illustrate further examples of permanent magnet modules having grooves in the radial direction. Despite the grooves 60 being illustrated in permanent magnet modules having a base with a flat top surface, such grooves may also be found in permanent magnets having a base with inclined top surfaces, such as those described regarding Figures 4 and 5. In the example of Figure 7, the grooves have a depth 61 of less than the half of the height of the base, i.e. the first height 35 is longer than the depth 61. In this example, the depth 61 may be for example 15 mm (1.38 inches) and the first height 35 may be for example 25 mm (0.98 inches).

Alternatively, in the example of Figure 8, the grooves have a depth 61 longer than the first height 35, for example the depth 61 may be of less than three quarters of the height of the base. In this way, the depth 61 may be for example 25 mm (0.98 inches) and the first height 35 may be for example 15 mm (1.38 inches). In some other examples, the depth may be higher than three quarters of the height of the base.

In some examples, the permanent magnet module 10 may comprise at least one groove 60 of the plurality of grooves having a depth 61 of less than three quarters of the height of the base, specifically of less than the half of the height of the base 30, and even more specifically of less than one third of the height of the base 30. In some examples, some or all the grooves 60 of the plurality of grooves may have a depth 61 of less than the three quarters of the height of the base, specifically of less than the half of the height of the base, and even more specifically of less than one third of the height of the base. In some examples, the depth 61 may be less than 25 mm (0.98 inches), specifically less than 15 mm (1.38 inches), and even more specifically between 1 mm to 15 mm (0.039 inches to 1.38 inches). In other examples, the depth 61 may be comprised between 10 mm to 25 mm (0. 39 inches to 0.98 inches).

In the examples illustrated in Figures 6 to 8, the permanent magnet module 10 may comprise at least one groove of the plurality of grooves 60 having a width 62 in the axial direction of the module of between 0.1 mm to 20 mm (0.0039 inches to 0.79 inches), and specifically of between 0.1 mm to 5 mm (0.0039 inches to 0.197 inches), and even more specifically of between 0.5 mm and 2 mm (0.0197 inches to 0.079 inches), for example of 1 mm (0.039 inches). In some examples, some or all the grooves 60 of the plurality of grooves may have the width 62 of between 0.1 mm to 20 mm (0.0039 inches to 0.79 inches), and specifically of between 0.1 mm to 5 mm (0.0039 inches to 0.197 inches), and even more specifically of between 0.5 mm and 2 mm (0.0197 inches to 0.079 inches), for example of 1 mm (0.039 inches).

In these examples, the permanent magnet module 10 may comprise an axial distance 63 between one of the grooves to a neighboring groove of the plurality of grooves of between 1 mm to 200 mm (0.039 inches to 7.87 inches), and specifically of between 10 mm to 100 mm (0.39 inches to 3.94 inches), and more specifically of between 40 mm to 80 mm (1.57 inches to 3.15 inches). In some examples, the axial distance 63 may be the same between all the grooves.

In some examples, at least one of the plurality of grooves has a depth of less than one third of the height of the base and a width in the axial direction of the module of between 0.1 mm to 5 mm; and wherein the axial distance between one of the grooves to a neighboring groove of the plurality of grooves is of between 10 mm to 100 mm.

Dimensions of the plurality of grooves 60 (depth 61, width 62 and length) and the axial distance 63 between the grooves may depend on the eddy currents to be reduced. Therefore, the depth 61 of the plurality of grooves may be a function of the axial distance 63 between grooves. Eddy current concentration is generally higher in the area of the base contacting the magnets, i.e. in the top surface 32, and in some cases, particularly in top surface 32 near to the first 51 and the second lateral surfaces 52, i.e. at the corners formed by the lateral surfaces and the top surface.

Losses caused by eddy currents are generally lower in electrical machines having relatively a low rotational speed, e.g. 2 to 20 rpm. Without wishing to be bound to any theory, this is understood to be because the magnetic flux circulating through a permanent magnet module from the magnet to the stator changes slower in electrical machines rotating at low speed than in those that rotates at medium or high speed.

Therefore, grooves of permanent magnet modules intended to be mounted on relatively low speed electrical machines may be less deep than grooves of modules to be mounted in high speed electrical machines. Distance between grooves may also depend on the rotational speed of the electrical machine, and thus the distance may be higher in low speed electrical machine than in high speed electrical machines. This is because, as losses caused by eddy currents are relatively lower in low speed machines (by its low speed), distancing the grooves or having grooves with less depth may be sufficient for minimizing the eddy currents, e.g. by cutting the eddy currents circulating axially along the module. The depth 61 of the plurality of grooves may thus be a function of the rotational speed of the electrical machine. Therefore, the module may have an efficient electrical behavior combined with a less complex manufacturing process.

Eddy currents may also depend on the harmonics of the magnetomotive force of the stator, since magnetomotive force (MMF) harmonics may induce eddy currents losses in the rotor. The magnetomotive force distribution of the stator in permanent magnets machines is generally non-sinusoidal and contains a fundamental wave and a number of harmonic waves. This magnetomotive force may depend on the stator configuration such as the number of slots or the winding arrangement or the number of poles and on the rotational speed of the electrical machine. As grooves reduce the eddy currents circulating on the base, the depth of the grooves may depend on the harmonics of the magnetomotive force of the stator.

In some examples, depth 61 of the plurality of grooves may be a function of at least one of the following parameters: axial distance 63 between neighboring grooves, rotational speed of the electrical machine and the harmonics of the magnetomotive force of the stator.

In the examples wherein the module is intended to be mounted on a wind turbine permanent magnet generator rotating at low speed, e.g. 2 rpm to 20 rpm, the module may have a plurality of grooves 60 extending from the first 51 to the second lateral surface 52, having a depth 61 of 10 - 25 mm (0.039 - 0.98 inches), a width 62 of 0.1 - 5 mm (0.0039 - 0.197 inches) and an axial distance 63 of 40 - 80 mm (1.57 - 3.15 inches) and all subranges therebetween. In this way, the efficiency of the module may be similar to modules formed by stacking insulated metal sheets.

In some examples, at least one groove of the plurality of grooves may be filled by non-magnetic material, e.g. resin or the excess of adhesive used for attaching the magnets to the base. In this way, the thermal conductivity of the module may be additionally improved.

Figure 9 shows an additional example of a base 30 of a permanent magnet module. In this example, the base 30 includes a bottom surface 31 adapted to be fixed to a rotor of an electrical machine, a top surface 32 for supporting permanent magnets (not shown in Figure 9), wherein the base comprises a plurality of grooves 60 partially extending through the base from the top surface to a first height above the bottom surface, such that the bottom surface extends substantially continuously in the axial direction. In this example, the base 30 further comprises a first 51 and a second lateral surface 52, and wherein at least one groove 60 of the plurality of grooves extends from the first lateral surface 51 to an intermediate point 55 between the first 51 and the second lateral surfaces 52. In this example, at least one groove 60 is not formed continuously from the first lateral surface 51 to the second lateral surface 52. Although the base illustrated in Figure 9 has a flat top surface, these grooves may also be applied in other module configurations, e.g. to those described regarding Figures 4 to 5.

In some examples, providing continuous grooves 60 from the first lateral surface 51 to the second lateral surface 52 may not be necessary, because eddy currents are higher in the portion of the top surface near to the first lateral surface 51 and to the second lateral surface 52. Eddy currents cause losses when there is an axial path for circulating the current. In some configurations, such losses caused by the eddy currents may be particularly high in the area close to the first lateral surface 51 and to the second lateral surface 52, because the magnetic flux changes more rapidly in these areas than in other areas of the modules. Therefore providing grooves perpendicular to the axial direction close to the first lateral surface 51 and to the second lateral surface 52, i.e. from the first lateral surface 51 to an intermediate point 55 and from the second lateral surface 52 to the intermediate point 55, may be sufficient to substantially reduce eddy currents along the permanent magnet module 10.

In some other examples, some of the grooves may extend from the first lateral surface 51 to the second lateral surface 52 and other grooves from the first lateral surface to end in an intermediate point between the first lateral surface and the second lateral surface, i.e. not completely extending from one lateral surface to the another one.

In some examples, the permanent magnet module may comprise an integral base having a bottom surface adapted to be fixed to a rotor of an electrical machine, a top surface for supporting the one or more permanent magnets wherein the base comprise a plurality of cuts partially extending through the base from the top surface. The plurality of cuts partially extends through the base from the top surface to a first height above the bottom surface. These cuts may extend from the top surface substantially perpendicular to the axial direction. In these examples, the base may comprise a first and a second lateral surface and the plurality of cuts may extend from the first to the second lateral surface. In these examples, the cuts may have a depth of between 10 to 25 mm (0.39 inches to 0.98 inches), and a width in the axial direction of the module of 0.1 mm to 5 mm (0.0039 inches to 0.197 inches); and wherein the axial distance between two neighboring cuts is of between 40 mm to 80 mm (1.57 inches to 3.15 inches).

In some examples, the depth may be of between 1 mm to 25 mm (0.039 inches to 0.98 inches, the width in the axial direction of the module may be of between 0.1 mm to 20 mm (0.0039 inches to 0.79 inches), and the axial distance between two neighboring cuts may be of between 1 mm to 200 mm (0.039 inches to 7.87 inches) and all subranges therebetween.

In some examples, the top surface comprises a flat surface and wherein one or more of the permanent magnets are mounted on the flat surface, and are arranged such as to have a radial magnetic configuration.

Figure 10 schematically illustrates a portion of an electrical machine 100 comprising an example of a permanent magnet module 10. The electrical machine 100 of the Figure 10 comprises a rotor 200, a stator 300 and an air gap 400 arranged between the rotor 200 and the stator 300. In this example, the rotor 200 comprises a rotor body 210 configured for rotating around a central rotational axis, a rotor rim 220 and a plurality of permanent magnet modules (10, 10', 10") attached to the rotor rim 220. In this example, the permanent magnet modules 10 of the Figure 10 may be similar to those described regarding Figure 1, although is not necessarily limited to them. The base 30 includes a bottom surface 31 fixed to the rotor 200 of the electrical machine 100 and a top surface 32 for supporting one or more permanent magnets 20. Such a base 30, further includes a plurality of grooves 60 partially extending through the base 30 form the top surface 32. In this example, the plurality of grooves extends from the top surface perpendicular to the axial direction to a first height (not shown for clarity purposes) above the bottom surface 31.

In this example, the top surface 32 of the base comprises a flat surface. One or more of the permanent magnets 20 may be mounted on the flat surface of the top surface 32, as to have a radial magnetic configuration. The magnets 20 may be securely fixed to the top surface 32 by e.g. using suitable adhesive or mechanical fasteners. According to this example, the South of each of the magnets of a first permanent magnet module 10 is arranged on the top surface of the base 31 (or to the rotor 200), while the North of each of the magnets is arranged facing the stator 300. Additionally, the permanent magnets of the adjacent permanent magnet modules 10', 10" are arranged with an opposite magnetic configuration, i.e. the South may be facing the stator 300. These magnetic configurations (North or South facing the stator) are generally called a radial magnetic configuration.

In some examples, the permanent magnet modules (10, 10', 10") may be fixed to the rotor rim 220 through anchors 230 engaging to the shape of lateral recesses of the permanent magnet module 10. The anchors 230 may be of such shape that they engage with one or more of the surfaces of the recesses 53 when fixed. T-shaped anchors 230 in this case have a shape that is complementary to the shape of two neighboring recesses. The anchors may thus fit substantially exactly in the recesses. To assemble the rotor of an electrical machine, the anchors 230 may be loosely attached at the circumference of a rotor rim. Then, the permanent magnet modules 10 may be inserted and slid between two neighboring anchors. Then, to fix the magnet modules 10 in place, the bolts of the anchors (not shown) may be tightened, so that the anchors press a surface of the base against the circumference of the rotor rim 220.

The electrical machine 100 depicted in Figure 10 may be a permanent magnet generator, and optionally permanent magnet generator for a wind turbine. In some examples, the electrical machine may be a permanent magnet generator for a wind turbine configured to rotate at low speed, e.g. 2 - 20 rpm.

Figure 11 shows a further example of an electrical machine 100. The electrical machine 100 comprises a rotor 200, a stator 300 and an air gap 400 arranged between the rotor 200 and the stator 300. In this example, the rotor 200 comprises a rotor body 210 configured for rotating around a central rotational axis, a rotor rim 220 and a plurality of permanent magnet modules (10, 10') attached to the rotor rim 220. The permanent magnet modules 10 of the Figure 10 may be similar to those described regarding Figure 4, although not limited to them. In this way, the base 30 includes a bottom surface 31 fixed to the rotor 200 of the electrical machine 100 and a top surface 32 for supporting one or more permanent magnets 20. Such a base 30, further includes a plurality of grooves 60 partially extending through the base from the top surface 32.

In this aspect, the permanent magnet module may comprise a central magnet support 90 which acts as a flux concentrator and supports the permanent magnets. The permanent magnet module may further comprise a first magnet 21 and a second magnet 22. In this way, the top surface 32 of the base may comprise first inclined surface 33 and second inclined surface 34. The first permanent magnet 21 may be mounted on the first inclined surface 33 and the second permanent magnet 22 may be mounted on the second inclined surface 34. Inclination of the magnets with respect to the corresponding local radial plane may vary (radial plane passing through the center of the magnet).

In some examples, the permanent magnet modules (10, 10') may be fixed to the rotor rim 220 through anchors 230 engaging to the shape of lateral recesses of the permanent magnet module 10. Alternatively, permanent magnet modules may also be attached by other suitable methods such as welding or bolting.

The magnets may have a circumferential orientation (also sometimes referred to as "transversal" or "tangential" orientation), i.e. the North and the South of each of the magnets are arranged in the rotor next to each other in a circumferential (or "tangential" direction. In this way, the magnetic flux lines from the South of the first magnet 21 of a first permanent magnet module 10 to the North of a second magnet 22 of second magnet module 10' through the first lateral surface will be substantially straight, i.e. horizontal. These two magnets (first permanent magnet 21 of the first module 10 and the second permanent magnet 22 of the second module 10') form a single pole, and the magnetic flux lines from the South of the second magnet 22 of the second module 10' to the North of the first magnet 21 of the magnet module 10 enclosing a winding arranged on the stator 300 and the flux concentrator 90.

In some examples, an electrical machine may comprise permanent magnet modules having an integral base having a bottom surface fixed to a rotor, a top surface supporting the one or more permanent magnets, wherein the base comprise a plurality of cuts partially extending through the base from the top surface. That is to say, the electrical machine may comprise any of the permanent magnet modules herein described.

The electrical machine 100 depicted in Figure 11 may be a permanent magnet generator, and optionally permanent magnet generator for a wind turbine. In some examples, the electrical machine may be a permanent magnet generator for a wind turbine configured to rotate at low speed, e.g. 2 - 20 rpm.

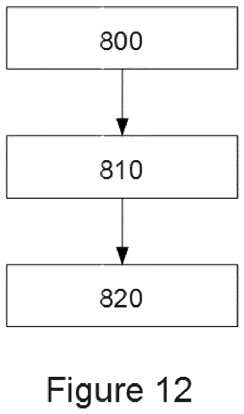

Figure 12 is a flow diagram of a method of manufacturing a permanent magnet according to an example.

Box 800 represents forming a base having a bottom surface adapted to be fixed to a rotor of an electrical machine, and a top surface for supporting on or more magnets. In some examples, the base may be formed by extruding a profile a magnetic conductive material with a die, e.g. cold drawing a steel profile. Extruding a profile may provide good dimensional accuracy in a relative low cost and quick process. Extruding may additionally reduce the scrap produced during forming the base of the module.

Forming a base may comprise cold drawing a steel profile. Cold drawing makes it possible to achieve complex profile cross sections with excellent precision. In cold drawing profile bars are drawn, i.e. pulled, through a forming die into a desired shape and thickness. In some examples, the drawn profile may be cut into a desired length, e.g. the length of the base of the permanent magnet module. In other examples, hot drawing may also be used.

Alternatively, forming may include forging a metal, i.e. shaping a metal using localized compressive force, or sintering, i.e. compacting and forming a solid mass of a metal powder by heat or pressure without melting it.

In yet other examples, such as for small series, forming a base may include machining a steel block in order to achieve the shape of the base.

Box 810 represents machining a plurality of grooves on the base partially extending through the base from the top surface. In some examples, machining may include mechanical machining, such as milling, i.e. the plurality of grooves are machined by a cutting tool which rotates to bring cutting edges to bear against the base and thus forming the grooves. In some examples, machining the plurality of grooves may comprise milling with a disc cutting tool. In other examples, milling might be carried out with a side-and-face cutting tool.

Alternatively, machining the plurality of grooves may comprise laser cutting or water jet cutting or electrical discharge machining.

Box 820 represents attaching one or more permanent magnets to the top surface. In this aspect, attaching permanent magnets may include gluing the magnets to the top surface of the base. Alternatively or additionally, magnets may be attached by mechanical fasteners or retained by a base and a central support of a magnet module.

This written description uses examples to disclose the invention, including the preferred embodiments, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A method of manufacturing a permanent magnet module (10) extending along an axial direction, the method comprising:
forming a base (30) as a single solid piece having a first lateral surface (51), a second lateral surface (52), a bottom surface (31) extending substantially continuously in the axial direction and being adapted to be fixed to a rotor of an electrical machine, and a top surface (32) for supporting one or more permanent magnets; wherein the first and second lateral surfaces (51, 52) extend from the bottom surface (31) to the top surface (32) in the axial direction and
machining a plurality of grooves (60) on the base (30) partially extending through the base from the top surface (32) to a first height (35) above the bottom surface (31); wherein at least one groove of the plurality of grooves (60) extends from the first lateral surface (51) to the second lateral surface (52); and
attaching one or more permanent magnets (20) to the top surface (31).

2. The method according to claim 1, wherein at least one groove of the plurality of grooves (60) extends from the first lateral surface (51) to an intermediate point (55) between the first and second lateral surfaces (51; 52).

3. The method according to any of claims 1 to 2, wherein the top surface (32) comprises a flat surface.

4. The method according to claim 3, wherein one or more of the permanent magnets (20) are mounted on the flat surface of the top surface (32), and are arranged such as to have a radial magnetic configuration.

5. The method according to any of claims 1 to 3, wherein the base (30) extends from the bottom surface (31) to the top surface (32) along a radial direction perpendicular to the axial direction; and wherein the base (30) further comprises a first lateral surface (51) and a second lateral surface (52) and the top surface (32) comprises a first inclined surface (33) and a second inclined surface (34), and wherein the first inclined surface (33) and the second inclined surface (34) are outwardly inclined along the radial direction.

6. The method according to claim 5, wherein the permanent magnet module (10) comprises at least two permanent magnets (20), and wherein one of the at least two permanent magnets (20) is mounted on the first inclined surface (33) and the other one of the at least two permanent magnets (20) is mounted on the second inclined surface (34), and are arranged such as to have a circumferential magnetic orientation.

7. The method according to any of claims 1 to 6, wherein at least one groove of the plurality of grooves (60) has a depth (61) of less than three quarters of the height of the base (30), more specifically of less than the half of the height of the base (30), and even more specifically of less than one third of the height of the base (30).

8. The method according to any of claims 1 to 7, wherein at least one groove of the plurality of grooves (10) has a width (62) in the axial direction of the module of between 0.1 mm to 20 mm, more specifically of between 0.1 mm to 5 mm, and even more specifically of between 0.5 mm to 2 mm.

9. The method according to any of claims 1 to 8, wherein an axial distance (63) between one of the grooves to a neighboring groove of the plurality of grooves (60) is of between 1 mm to 200 mm, and specifically of between 10 mm to 100 mm, and more specifically of between 40 mm to 80 mm.

10. The method according to any of claims 1 to 9, wherein the depth (61) of the grooves is a function of a least one of the following parameters: axial distance (63) between neighboring grooves, rotational speed of the electrical machine and harmonics of the magnetomotive force of the stator.

11. The method according to any of claims 1 to 10, wherein forming the base (30) comprises cold drawing a steel profile.

12. The method according to any of claims 1 to 11, wherein machining the plurality of grooves (60) comprises milling with a disc cutting tool.

13. The method according to any of claims 1 to 12, further comprising:
attaching a plurality of permanent magnet modules (10) according to any of claims 1 - 10 to an electrical machine (100) comprising:
a stator (300), a rotor (200) and an air gap (400) arranged between the rotor (200) and the stator (300), the rotor (200) comprising:
a rotor body (210) configured for rotating around a central rotational axis and a rotor rim (220);
wherein the plurality of permanent magnet modules (10) are attached to the rotor rim (220).

14. The method of claim 13, wherein the electrical machine (100) is a permanent magnet generator, and optionally a permanent magnet generator for a wind turbine.

## Patentansprüche

1. Verfahren zum Produzieren eines Permanentmagnetmoduls (10), das sich entlang einer axialen Richtung erstreckt, wobei das Verfahren umfasst:
Bilden einer Basis (30) als ein einziges festes Stück, das eine erste Seitenfläche (51), eine zweite Seitenfläche (52), eine Bodenfläche (31), die sich im Wesentlichen kontinuierlich in der axialen Richtung erstreckt und dazu geeignet ist, an einem Rotor einer elektrischen Maschine befestigt zu werden, und eine obere Fläche (32) zum Tragen eines oder mehrerer Permanentmagnete aufweist; wobei sich die erste und die zweite Seitenfläche (51, 52) von der Bodenfläche (31) zu der oberen Fläche (32) in der axialen Richtung erstrecken, und
maschinelles Einarbeiten einer Vielzahl von Nuten (60) in die Basis (30), die sich teilweise von der oberen Fläche (32) bis zu einer ersten Höhe (35) oberhalb der Bodenfläche (31) durch die Basis erstrecken; wobei sich mindestens eine Nut der Vielzahl von Nuten (60) von der ersten Seitenfläche (51) zu der zweiten Seitenfläche (52) erstreckt; und
Anbringen eines oder mehrerer Permanentmagnete (20) an der oberen Fläche (31).

2. Verfahren nach Anspruch 1, wobei sich mindestens eine Nut der Vielzahl von Nuten (60) von der ersten Seitenfläche (51) zu einem Zwischenpunkt (55) zwischen der ersten und der zweiten Seitenfläche (51; 52) erstreckt.

3. Verfahren nach einem der Ansprüche 1 bis 2, wobei die obere Fläche (32) eine flache Fläche umfasst.

4. Verfahren nach Anspruch 3, wobei ein oder mehrere Permanentmagnete (20) auf der flachen Fläche der oberen Fläche (32) montiert und derart angeordnet sind, dass sie eine radiale magnetische Konfiguration aufweisen.

5. Verfahren nach einem der Ansprüche 1 bis 3, wobei sich die Basis (30) von der Bodenfläche (31) bis zur oberen Fläche (32) entlang einer radialen Richtung senkrecht zur axialen Richtung erstreckt; und wobei die Basis (30) ferner eine erste Seitenfläche (51) und eine zweite Seitenfläche (52) umfasst und die obere Fläche (32) eine erste geneigte Fläche (33) und eine zweite geneigte Fläche (34) umfasst, und wobei die erste geneigte Fläche (33) und die zweite geneigte Fläche (34) entlang der radialen Richtung nach außen geneigt sind.

6. Verfahren nach Anspruch 5, wobei das Permanentmagnetmodul (10) mindestens zwei Permanentmagnete (20) umfasst und wobei einer der mindestens zwei Permanentmagnete (20) auf der ersten geneigten Fläche (33) montiert ist und der andere der mindestens zwei Permanentmagnete (20) auf der zweiten geneigten Fläche (34) montiert ist und derart angeordnet sind, dass sie eine umlaufende magnetische Ausrichtung aufweisen.

7. Verfahren nach einem der Ansprüche 1 bis 6, wobei mindestens eine Nut der Vielzahl von Nuten (60) eine Tiefe (61) von weniger als drei Viertel der Höhe der Basis (30), insbesondere von weniger als der Hälfte der Höhe der Basis (30) und noch spezieller von weniger als einem Drittel der Höhe der Basis (30) aufweist.

8. Verfahren nach einem der Ansprüche 1 bis 7, wobei mindestens eine Nut der Vielzahl von Nuten (10) eine Breite (62) in axialer Richtung des Moduls zwischen 0,1 mm und 20 mm, insbesondere zwischen 0,1 mm und 5 mm und noch spezieller zwischen 0,5 mm und 2 mm aufweist.

9. Verfahren nach einem der Ansprüche 1 bis 8, wobei ein axialer Abstand (63) zwischen einer der Nuten und einer benachbarten Nut der Vielzahl von Nuten (60) zwischen 1 mm und 200 mm, insbesondere zwischen 10 mm und 100 mm und noch spezieller zwischen 40 mm und 80 mm beträgt.

10. Verfahren nach einem der Ansprüche 1 bis 9, wobei die Tiefe (61) der Nuten von mindestens einem der folgenden Parameter abhängt: axialer Abstand (63) zwischen benachbarten Nuten, Drehzahl der elektrischen Maschine und Oberschwingungen der magnetomotorischen Kraft des Stators.

11. Verfahren nach einem der Ansprüche 1 bis 10, wobei das Bilden der Basis (30) das Kaltziehen eines Stahlprofils umfasst.

12. Verfahren nach einem der Ansprüche 1 bis 11, wobei das maschinelle Einarbeiten der Vielzahl von Nuten (60) das Fräsen mit einem Scheibenschneidwerkzeug umfasst.

13. Verfahren nach einem der Ansprüche 1 bis 12, das ferner umfasst:
Anbringen einer Vielzahl von Permanentmagnetmodulen (10) nach einem der Ansprüche 1-10 an einer elektrischen Maschine (100), umfassend:
einen Stator (300), einen Rotor (200) und einen zwischen dem Rotor (200) und dem Stator (300) angeordneten Luftspalt (400), wobei der Rotor (200) umfasst:
einen Rotorkörper (210), der zum Drehen um eine zentrale Drehachse ausgelegt ist, und einen Rotorkranz (220);
wobei die Vielzahl von Permanentmagnetmodulen (10) an dem Rotorkranz (220) angebracht ist.

14. Verfahren nach Anspruch 13, wobei die elektrische Maschine (100) ein Permanentmagnetgenerator und optional ein Permanentmagnetgenerator für eine Windturbine ist.

## Revendications

1. Procédé de fabrication d'un module à aimant permanent (10) s'étendant le long d'une direction axiale, le procédé comprenant :
la formation d'une base (30) en une seule pièce solide ayant une première surface latérale (51), une seconde surface latérale (52), une surface de fond (31) s'étendant sensiblement en continu dans la direction axiale et étant adaptée pour être fixée à un rotor d'une machine électrique, et une surface de dessus (32) pour supporter un ou plusieurs aimants permanents ; dans lequel les première et seconde surfaces latérales (51, 52) s'étendent de la surface de fond (31) à la surface de dessus (32) dans la direction axiale et
l'usinage d'une pluralité de rainures (60) sur la base (30) s'étendant partiellement à travers la base depuis la surface de dessus (32) jusqu'à une première hauteur (35) au-dessus de la surface de fond (31) ; dans lequel au moins une rainure de la pluralité de rainures (60) s'étend de la première surface latérale (51) à la seconde surface latérale (52) ; et
la fixation d'un ou plusieurs aimants permanents (20) sur la surface de dessus (31).

2. Procédé selon la revendication 1, dans lequel au moins une rainure de la pluralité de rainures (60) s'étend de la première surface latérale (51) à un point intermédiaire (55) entre les première et seconde surfaces latérales (51 ; 52).

3. Procédé selon l'une quelconque des revendications 1 à 2, dans lequel la surface de dessus (32) comprend une surface plane.

4. Procédé selon la revendication 3, dans lequel un ou plusieurs des aimants permanents (20) sont montés sur la surface plane de la surface de dessus (32) et sont agencés de manière à avoir une configuration magnétique radiale.

5. Procédé selon l'une quelconque des revendications 1 à 3, dans lequel la base (30) s'étend de la surface de fond (31) à la surface de dessus (32) le long d'une direction radiale perpendiculaire à la direction axiale ; et dans lequel la base (30) comprend en outre une première surface latérale (51) et une seconde surface latérale (52) et la surface de dessus (32) comprend une première surface inclinée (33) et une seconde surface inclinée (34), et dans lequel la première surface inclinée (33) et la seconde surface inclinée (34) sont inclinées vers l'extérieur le long de la direction radiale.

6. Procédé selon la revendication 5, dans lequel le module à aimant permanent (10) comprend au moins deux aimants permanents (20), et dans lequel un aimant des au moins deux aimants permanents (20) est monté sur la première surface inclinée (33) et l'autre aimant des au moins deux aimants permanents (20) est monté sur la seconde surface inclinée (34), et sont agencés de manière à avoir une orientation magnétique circonférentielle.

7. Procédé selon l'une quelconque des revendications 1 à 6, dans lequel au moins une rainure de la pluralité de rainures (60) présente une profondeur (61) inférieure aux trois quarts de la hauteur de la base (30), plus spécifiquement inférieure à la moitié de la hauteur de la base (30), et encore plus spécifiquement inférieure à un tiers de la hauteur de la base (30).

8. Procédé selon l'une quelconque des revendications 1 à 7, dans lequel au moins une rainure de la pluralité de rainures (10) présente une largeur (62) dans la direction axiale du module comprise entre 0,1 mm et 20 mm, plus spécifiquement entre 0,1 mm et 5 mm, et encore plus spécifiquement entre 0,5 mm et 2 mm.

9. Procédé selon l'une quelconque des revendications 1 à 8, dans lequel une distance axiale (63) entre l'une des rainures et une rainure voisine de la pluralité de rainures (60) est comprise entre 1 mm et 200 mm, et plus spécifiquement entre 10 mm et 100 mm, et plus spécifiquement entre 40 mm et 80 mm.

10. Procédé selon l'une quelconque des revendications 1 à 9, dans lequel la profondeur (61) des rainures est fonction d'au moins un des paramètres suivants : distance axiale (63) entre rainures voisines, vitesse de rotation de la machine électrique et harmoniques de la force magnétomotrice du stator.

11. Procédé selon l'une quelconque des revendications 1 à 10, dans lequel la formation de la base (30) comprend l'étirage à froid d'un profilé en acier.

12. Procédé selon l'une quelconque des revendications 1 à 11, dans lequel l'usinage de la pluralité de rainures (60) comprend le fraisage avec un outil de coupe à disque.

13. Procédé selon l'une quelconque des revendications 1 à 12, comprenant en outre :
la fixation d'une pluralité de modules d'aimants permanents (10) selon l'une quelconque des revendications 1 à 10 à une machine électrique (100) comprenant :
un stator (300), un rotor (200) et un entrefer (400) agencé entre le rotor (200) et le stator (300), le rotor (200) comprenant :
un corps de rotor (210) conçu pour tourner autour d'un axe de rotation central et d'une jante de rotor (220) ;
dans lequel la pluralité de modules à aimants permanents (10) sont fixés à la jante de rotor (220).

14. Procédé selon la revendication 13, dans lequel la machine électrique (100) est un générateur à aimant permanent, et éventuellement un générateur à aimant permanent pour une éolienne.
